Europäisches Patentamt

European Patent Office

Office européen des brevets

(19)

(11) Veröffentlichungsnummer : **0 235 690 B1**

(12) # EUROPÄISCHE PATENTSCHRIFT

(45) Veröffentlichungstag der Patentschrift :
**05.06.91 Patentblatt 91/23**

(51) Int. Cl.$^5$ : **C08F 287/00, C08F 283/12**

(21) Anmeldenummer : **87102366.9**

(22) Anmeldetag : **19.02.87**

(54) **Pfropfpolymerisate auf Kautschukpolymeren mit blockartiger Struktur.**

(30) Priorität : **04.03.86 DE 3606982**

(43) Veröffentlichungstag der Anmeldung :
**09.09.87 Patentblatt 87/37**

(45) Bekanntmachung des Hinweises auf die
Patenterteilung :
**05.06.91 Patentblatt 91/23**

(84) Benannte Vertragsstaaten :
**DE FR GB IT**

(56) Entgegenhaltungen :
**EP-A- 0 029 947**
**US-A- 3 051 684**
**US-A- 4 139 519**

(56) Entgegenhaltungen :
**PATENT ABSTRACTS OF JAPAN, Band 3, Nr.**
**46 (C-43), 18th April 1979, Seite 163 C43; &**
**JP-A-52 87 440 ( NIPPON SODA K.K.) 02-**
**22-1979**

(73) Patentinhaber : **BAYER AG**
**W-5090 Leverkusen 1 Bayerwerk (DE)**

(72) Erfinder : **Eichenauer, Herbert Dr.**
**Goethestrasse 71**
**W-4047 Dormagen (DE)**
Erfinder : **Lindner, Christian, Dr.**
**Riehlerstrasse 200**
**W-5000 Köln 60 (DE)**
Erfinder : **Ott, Karl-Heinz, Dr.**
**Paul-Klee-Strasse 54**
**W-5090 Leverkusen (DE)**

**Beschreibung**

Die Erfindung betrifft neue Pfropfpolymerisate von Vinylmonomeren oder Vinylmonomerengemischen auf Blockcopolymerisate aus Blöcken von wiederkehrenden Siloxan-Struktureinheiten und Blöcken von wiederkehrenden Dien-Struktureinheiten als Pfropfgrundlagen.

Bekannt sind nur Pfropfpolymerisate von Vinylmonomeren oder Vinylmonomerengemischen auf solche Blockcopolymerisate die wenigstens einen Polymerblock mit einem thermoplastischen Erweichungsverhalten aufweisen, (d.h. eine Glasübergangstemperatur über + 20°C), z.B. mit Styrol gepfropfte Polystyrol-Polybutadien-Blockcopolymere gemäß DE-OS 1 941 018.

Pfropfpolymerisate von Vinylmonomeren oder Vinylmonomerengemischen auf Blockcopolymere, in denen alle Polymerblöcke für sich einen Kautschuk darstellen, sind dagegen bisher nicht bekannt.

Es wurde gefunden, daß Pfropfprodukte, die durch Polymerisation von Vinylmonomeren oder Vinylmonomerengemischen in Gegenwart blockartig aufgebauter Polymerer aus Polysiloxan-Blöcken und von Blöcken aus Homo- oder Copolymeren konjugierter Diene entstehen, besonders günstige Eigenschaften z.B. hohe Flexibilität bei tiefer Temperatur besitzen.

Gegenstand der Erfindung sind Pfropfpolymerisate von

a) 50 bis 100 Gew.-Teilen von Vinylmonomeren oder Vinylmonomergemischen auf

b) 10 bis 200 Gew.-Teile eines Kautschuks mit blockartiger Struktur aus wiederkehrenden Struktureinheiten der Formel (I)

$$\{A - B\}_n \quad (I)$$

und gegebenenfalls wiederkehrenden Struktureinheiten der Formel (II)

$$\{A' - C\}_m \quad (II)$$

wobei n und m solche Zahlen bedeuten, daß das mittlere Molekulargewicht ($M_w$) des Kautschuks 10000 bis 1000000, vorzugsweise 10000 bis 50000 und 100000 bis 500000 beträgt,
und worin bedeuten,

A und A' gleiche oder verschiedene bifunktionelle Polysiloxansegmente der Formel (III)

$$\{(R^1)(R^2)SiO\}_x \quad (III)$$

mit $R^1$ und $R^2$ Aryl und/oder Alkyl, und x eine Zahl, so daß (III) Molekulargewichte ($M_w$) von > 500, vorzugsweise > 750 besitzt,

B bifunktionelle Homo- und/oder Copolymersegmente aus konjugierten Dienen, mit Molekulargewichten ($M_w$) > 800, vorzugsweise > 1000,

C bifunktionelle aliphatische Polyester- und/oder aliphatische Polyethersegmente mit Molekulargewichten ($M_w$) > 800, vorzugsweise > 1000,

wobei die Glasübergangstemperaturen von A, A', B und C unterhalb von 0°C, bevorzugt unterhalb von –20°C liegen.

Die Segmente B der als Pfropfgrundlage eingesetzten Kautschuke sind bevorzugt Butadienhomopolymerisate oder Butadiencopolymerisate z.B. mit bis zu 35 Gew.-%, bezogen auf B, copolymerisierten Monomeren wie Acrylnitril, Methacrylnitril, Styrol, Halogenstyrol, p-Methylstyrol, Methacrylsäureester mit 1-12 C-Atomen in der Alkoholkomponente und Acrylsäureester mit 1-12 C-Atomen in der Alkoholkomponente ; bevorzugte Comonomere des Butadiens sind Acrylnitril, Styrol, Methylmethacrylat, n-Butylacrylat, Ethylacrylat oder Ethylhexylacrylat.

Die Blöcke A der Kautschuke sind Polydialkyl-, Polydiaryl- oder Polyarylalkylsiloxane, insbesondere Polydimethylsiloxan-oder Polymethylphenylsiloxan-Reste. Sie besitzen Blockmolekulargewichte von 500 bis 20.000, insbesondere 1.000 bis 10.000 ; sie sind weitgehend linear.

Die Herstellung der als Pfropfgrundlage eingesetzten Kautschuke ist bekannt. So lassen sich die Struktureinheiten (I) beispielsweise durch Umsetzung α,ω-bisacylierter Polysiloxane (Herstellung z.B. gemäß Britischen Patent 899 939) mit Hydroxy-terminierten Dienpolymeren (Herstellung z.B. gemäß Patentschrift DE 2 614 409) synthetisieren, die Struktureinheiten (II) können z.B. durch Umsetzung α,ω-bisacylierter Polysiloxane mit Hydroxy-terminierten Polyestern oder Polyethern erhalten werden.

Die Segmente C sind bevorzugt Polyalkylenoxid-Segmente mit $C_{1-6}$-Alkyleneinheiten oder bifunktionelle Polyesterreste d.h. Polykondensate aus aliphatischen $C_{2-12}$-Dicarbonsäuren und aliphatischen $C_{2-18}$-Alkylendiolen.

Die Polyestersegmente C leiten sich von aliphatischen gesättigten oder ungesättigten Dicarbonsäuren ab, z.B. von Oxalsäure, Bernsteinsäure, Adipinsäure, Azelainsäure, Sebacinsäure, Kohlensäure, Maleinsäure, Fumarsäure, Butadiendicarbonsäure. Als Diolkomponenten der Polyester eignen sich besonders Ethandiol, Butandiol, Hexandiol, Neopentylglykol, Alkylenetherdiole mit Molekulargewichten bis zu etwa 150 sowie ungesättigte aliphatische Diole wie Butendiole und höhere ungesättigte Dicarbonsäuren mit mehr als 10 C-Atomen im Molekül. Als Segmente C eignen sich auch Polyalkylenetherdiolreste, z.B. Polyformaldehydreste, Polytetrahydrofuranreste, (d.h. Polybutylenoxidreste), Polyethylenoxidreste sowie deren Copolymere.

Dabei können als Segmente C nicht nur Polyesterblöcke oder nur Polyetherblöcke vorliegen. Es kann auch ein Teil der Segmente C Polyester und der andere Teil Polyether sein, schließlich können auch Segmente C vorliegen, die nebeneinander als Segmente C Ether- und Esterfunktionen enthalten. Wurden zur Herstellung der Blockcopolymeren neben linearen auch verzweigte Polyester- oder Polyetherkomponenten eingesetzt, so werden Blockcopolymere enthalten, die verzweigte aber unvernetzte Strukturen aufweisen.

Ebenfalls geeignet als Segmente C sind Polyether- oder Polyesterblöcke, die selbst eine Sequenz- oder auch Blockstruktur aufweisen, z.B. Polyethylenoxid-Polypropylenoxid-Blockcopolymer- sowie Polyester-Polyether-Blockcopolymer-Bausteine.

In den erfindungsgemäßen Pfropfpolymerisaten können bei den als Pfropfgrundlagen eingesetzten Blockcopolymeren nicht nur Kombinationen aus Dienpolymerisatblöcken mit Polysiloxanblöcken vorliegen, sondern auch solche, die zusätzlich mit aliphatischen Polyester- und/oder Polyethersegmenten kombiniert sind. Besonders geeignete Pfropfgrundlagen zur Herstellung der erfindungsgemäßen Pfropfpolymerisate sind solche Polymerisate, die bis zu 20 Gew.-%, insbesondere bis zu 10 Gew.-% (bezogen auf das Gesamtgewicht an Kautschukgrundlage) eines Polyesters, insbesondere auf Basis Adipinsäure, oder eines Polyethers mit bis zu 4 C-Atomen in der Alkylengruppe einpolymerisiert enthalten.

Als Pfropfmonomere sind Vinylaromaten, z.B. Styrol, α-Methylstyrol, p-Methylstyrol, Vinyltoluol, Halogenstyrol, Acrylverbindungen, z.B. Acrylnitril, Methacrylnitril, (Meth) Acrylsäureester mit 1 bis 12 C-Atomen in der Alkoholkomponente, z.B. Methylmethacrylat, Vinylacetat oder N-Phenylmaleinimid bzw. aus diesen Monomeren ausgewählte Mischungen geeignet.

Bevorzugt sind Pfropfpolymerisate, die als aufgepfropfte Monomere Styrol, α-Methylstyrol, Acrylnitril, Methylmethacrylat oder Mischungen daraus enthalten.

Die Mengen an aufgepfropften Monomeren betragen 10 bis 500 Gew.-Teile, vorzugsweise 25 bis 400 Gew.-Teile und besonders bevorzugt 30 bis 300 Gew.-Teile (jeweils bezogen auf 100 Gew.-Teile Kautschukpolymer), wobei als Monomere besonders bevorzugt Mischungen von Styrol und Acrylnitril im Gewichtsverhältnis 60 : 40 bis 95 : 5 oder Methylmethacrylat eingesetzt werden.

Ein weiterer Gegenstand der Erfindung ist ein Verfahren zur Herstellung der erfindungsgemäßen Pfropfpolymerisate, das dadurch gekennzeichnet ist, daß man in Gegenwart der oben beschriebenen Blockcopolymerisate die oben angegebenen Monomeren bzw. Monomerengemische radikalisch polymerisiert. Dabei kann die Polymerisation thermisch oder durch Zusatz geeigneter Initiatoren ausgelöst werden. Geeignete radikalbildende Initiatoren sind organische und anorganische Peroxide, z.B. Benzoylperoxid, anorganische Persulfate wie z.B. Kaliumpersulfat, Azoinitiatoren wie z.B. Azobisisobutyronitril, sowie Redox-Systeme, die aus einem Oxidationsmittel, vorzugsweise einem Peroxid und einem Reduktionsmittel bestehen.

Die Herstellung der erfindungsgemäßen Polymerisate kann durch Masse-, Lösungs-, Suspensions- oder Emulsionspolymerisation oder durch Kombination dieser Verfahren in an sich bekannter Weise erfolgen, bevorzugt ist die Polymerisation in Lösung.

Geeignete Lösungsmittel sind dabei beispielsweise (cyclo)-aliphatische Kohlenwasserstoffe, z.B. Cyclohaxan, aromatische Kohlenwasserstoffe, z.B. Toluol oder Ethylbenzol, halogenierte, aromatische Kohlenwasserstoffe, z.B. Chlorbenzol, Ether, Ketone, Amide oder sonstige Verbindungen, in denen die eingesetzten Reagenzien löslich sind.

Die Pfropfpolymerisationsreaktion kann in einem weiten Temperaturbereich durchgeführt werden, vorzugsweise erfolgt sie zwischen 30°C und 200°C, besonders bevorzugt zwischen 50°C und 150°C.

Die erfindungsgemäßen Pfropfpolymerisate besitzen gute mechanische Eigenschaften, insbesondere bei tiefen Temperaturen, gute Chemikalien- und Lösungsmittelresistenz und sind, gegebenenfalls in Mischung mit anderen Polymeren, zur thermoplastischen Verarbeitung geeignet. Weiterhin eignen sie sich als Klebrigmacher, Klebstoffkomponenten, elastische Beschichtungen, Dichtungsmassen oder Isoliermassen.

Beispiele

Beispiel 1

400 g eines Kautschukpolymeren mit blockartiger Struktur, das durch Umsetzung von 1.000 Gewichtsteilen eines Copolymerisats aus Butadien und Acrylnitril mit terminalen Hydroxylgruppen (Acrylnitrilgehalt = 15 Gew.-%, aus der OH-Zahl bestimmtes Molekulargewicht = 5.000) und 800 Gewichtsteilen eines α,ω-bis-acetylierten Polydimethylsiloxans mit einem Molekulargewicht von 4.000 (bestimmt durch Acetylbestimmung) hergestellt wurde, werden in 1.500 ml Ethylbenzol gelöst, mit 75,6 g Acrylnitril, 194,4 g Styrol und 21,6 g tert.-Butylperpivalat versetzt und unter Stickstoff 7 Stunden lang auf 70°C erhitzt. Danach werden 0,7 g 2,6-Di-tert.-butyl-4-methylphenol zugegeben und das Lösungsmittel im Vakuum vollständig entfernt. Es resultieren 703 g (99%) eines elastischen Pfropfpolymerisats.
Die Prüfung des Kältebruchverhaltens nach DIN 53 372 erfolgte an Folien mit den Maßen 60 × 15 × 0,38 [mm] : nicht gebrochen bis −40°C.

Beispiel 2

440 g des in Beispiel 1 beschriebenen Kautschukpolymeren mit blockartiger Struktur werden zusammen mit 200 g Methylmethacrylat in 1.500 ml Ethylbenzol gelöst, mit 15 g tert.-Butylperpivalat versetzt und unter Stickstoff 7 Stunden lang auf 70°C erhitzt. Nach Zugabe von 0,7 g 2,6-Di-tert.-butyl-4-methylphenol wurde das Lösungsmittel im Vakuum vollständig entfernt. Es resultierten 616,7 g (96%) Pfropfkautschuk.

Die Prüfung des Kältebruchverhaltens nach DIN 53 372 erfolgte an Folien mit den Maßen 60 × 15 × 0,4 [mm] : nicht gebrochen bis −40°C.

### Beispiel 3

394 g eines Kautschukpolymeren mit blockartiger Struktur, das durch Umsetzung von 1.000 Gewichtsteilen eines Polybutadienöls mit terminalen Hydroxylgruppen (aus der OH-Zahl bestimmtes Molekulargewicht = 2.700) und 1.480 Gewichtsteilen eines $\alpha,\omega$-bis-acetylierten Polydimethylsiloxans mit einem Molekulargewicht von 4.000 (bestimmt durch Acetylbestimmung) hergestellt wurde, werden in 1.500 ml Ethylbenzol gelöst, mit 46,8 g Acrylnitril, 120,4 g Styrol und 21,6 g tert.-Butylperpivalat versetzt und unter Stickstoff 7 Stunden lang auf 70°C erhitzt. Nach Zugabe von 0,7 g 2,6-Di-tert.-butyl-4-methylphenol wurde das Lösungsmittel im Vakuum vollständig entfernt. Es resultierten 537,2 g (96%) eines elastischen Pfropfkautschuks.

Die Prüfung des Kältebruchverhaltens nach DIN 53 372 erfolgte an Folien mit den Maßen 60 × 15 × 0,4 [mm] : nicht gebrochen bis −70°C.

### Beispiel 4 (Vergleichsbeispiel)

300 g eines Styrol/Butadien-Blockcopolymeren mit einem Styrolgehalt von 25% (18% Blockstyrolgehalt ; ®BUNA BL 6578, Bunawerke Hüls) werden in 1800 ml Ethylbenzol gelöst, mit 63 g Acrylnitril, 162 g Styrol und 21,6 g tert.Butylperpivalat versetzt und unter Stickstoff 7 Stunden lang auf 70°C erhitzt. Nach Zugabe von 0,7 g 2,6-Di-tert.-butyl-4-methylphenol wird das Lösungsmittel im Vakuum vollständig entfernt. Es resultieren 507,5 g (97%) eines elastischen Pfropfprodukts.

Die Prüfung des Kältebruchverhaltens nach DIN 53 372 erfolgte an Folien mit den Maßen 60 × 15 × 0,39 [mm] : nicht gebrochen bis −25°C.

## Ansprüche

1. Pfropfpolymerisate von
a) 50 bis 100 Gew.-Teilen von Vinylmonomeren oder Vinylmonomergemischen auf
b) 10 bis 200 Gew.-Teile eines Kautschukpolymeren mit blockartiger Struktur aus wiederkehrenden Struktureinheiten der Formel (I)

$$\{A - B\}_n \quad (I)$$

und gegebenenfalls wiederkehrenden Struktureinheiten der Formel (II)

$$\{A' - C\}_m \quad (II)$$

wobei n und m solche Zahlen bedeuten, daß das mittlere Molekulargewicht ($M_w$) des Kautschuks 10000 bis 1000000 beträgt,
und worin bedeuten :
A und A' gleiche oder verschiedene bifunktionelle Polysiloxansegmente der Formel (III)

$$\{(R^1)(R^2)SiO\}_x \quad (III)$$

mit $R^1$ und $R^2$ = Aryl und/oder Alkyl und x eine Zahl, so daß (III) Molekulargewichte ($M_w$) von > 500 besitzt,
B bifunktionelle Homo- und/oder Copolymersegmente aus konjugierten Dienen, mit Molekulargewichten ($M_w$) > 800,
C bifunktionelle aliphatische Polyester- und/ oder aliphatische Polyethersegmente mit Molekulargewichten ($M_w$) > 800
wobei die Glasübergangstemperaturen der polymeren Blöcke A, A', B und C unterhalb von 0°C liegen.

2. Pfropfpolymerisate nach Anspruch 1, dadurch gekennzeichnet, daß die Vinylmonomeren Styrol, $\alpha$-Methylstyrol, Acrylnitril, Methylmethacrylat oder Mischungen daraus sind.

3. Pfropfpolymerisate nach Ansprüchen 1 und 2, dadurch gekennzeichnet, daß das Segment B des Kautschuks einen bifunktionellen Rest eines Butadienhomopolymerisats oder -copolymerisats mit bis zu 35 Gew.-% (bezogen auf B) copolymerisiertem Acrylnitril, Styrol, Methylmethacrylat oder $C_1$-$C_{12}$-Alkylacrylat darstellt.

4. Verfahren zur Herstellung von Pfropfpolymerisaten, dadurch gekennzeichnet, daß in Gegenwart eines Kautschuks mit blockartiger Struktur aus wiederkehrenden Struktureinheiten der Formel (I)

$$\{A - B\}_n \quad (I)$$

und gegebenenfalls wiederkehrenden Struktureinheiten der Formel (II)

$$\{A' - C\}_m \quad (II)$$

wobei n und m solche Zahlen bedeuten, daß das mittlere Molekulargewicht ($M_w$) des Kautschuks 10000 bis 1000000 beträgt,
und worin bedeuten
A und A' gleiche oder verschiedene bifunktionelle Polysiloxansegmente der Formel (III)

$$\{(R^1)(R^2)SiO\}_x \quad (III)$$

mit $R^1$ und $R^2$ = Aryl und/oder Alkyl, und x eine Zahl, so daß (III) Molekulargewichte ($M_w$) von > 500 besitzt,

B bifunktionelle Homo- und/oder Copolymersegmente aus konjugierten Dienen, mit Molekulargewichten ($M_w$) > 800,

C bifunktionelle aliphatische Polyester- und/ oder aliphatische Polyethersegmente mit Molekulargewichten ($M_w$) > 800

wobei die Glasübergangstemperaturen der polymeren Blöcke A, A′, B und C unterhalb von 0°C liegen,

Vinylmonomere oder Vinylmonomerengemische radikalisch polymerisiert werden.

**Claims**

1. Graft polymers of

a) from 50 to 100 parts by weight of vinyl monomers or vinyl monomer mixtures on

b) from 10 to 200 parts by weight of a rubber polymer having a block structure of recurrent structural units corresponding to formula (I)

$$\{A - B\}_n \quad \text{(I)}$$

and optionally recurrent structural units corresponding to formula (II)

$$\{A' - C\}_m \quad \text{(II)}$$

wherein n and m are numbers such that the average molecular weight ($M_w$) of the rubber is from 10,000 to 1000000, and wherein

A and A′ denote identical or different bifunctional polysiloxane segments corresponding to formula (III)

$$\{(R^1)(R^2)SiO\}_x \quad \text{(III)}$$

in which $R^1$ and $R^2$ = aryl and/or alkyl and x denotes a number such that (III) has molecular weights ($M_w$) of > 500,

B denotes bifunctional homo- and/or copolymer segments of conjugated dienes having molecular weights ($M_w$) > 800 and

C denotes bifunctional aliphatic polyester and/or aliphatic polyether segments having molecular weights ($M_w$) > 800,

the glass transition temperatures of the polymer blocks A, A′, B and C being below 0°C.

2. Graft polymers according to Claim 1, characterised in that the vinyl monomers are styrene, α-methylstyrene, acrylonitrile, methyl methacrylate or mixtures thereof.

3. Graft polymers according to Claims 1 and 2, characterised in that segment B of the rubber is a bifunctional residue of a butadiene homopolymer or copolymer containing up to 35% by weight (based on B) of copolymer-ised acrylonitrile, styrene, methyl methacrylate or $C_1$-$C_{12}$-alkyl acrylate.

4. A process for the preparation of graft polymers, characterised in that vinyl monomers or vinyl monomer mixtures are radically polymerised in the presence of a rubber having a block structure of recurrent structural units corresponding to formula (I)

$$\{A - B\}_n \quad \text{(I)}$$

and optionally recurrent structural units corresponding to formula (II)

$$\{A' - C\}_m \quad \text{(II)}$$

wherein n and m are numbers such that the average molecular weight ($M_w$) of the rubber is from 10,000 to 1,000,000 and wherein A and A′ are identical or different bifunctional polysiloxane segments corresponding to formula (III)

$$\{(R^1)(R^2)SiO\}_x \quad \text{(III)}$$

in which $R^1$ and $R^2$ = aryl and/or alkyl and x denotes a number such that (III) has molecular weights ($M_w$) of > 500,

B denotes bifunctional homo- and/or copolymer segments of conjugated dienes having molecular weights ($M_w$) > 800, and

C denotes bifunctional aliphatic polyester and/or aliphatic polyether segments having molecular weights ($M_w$) > 800,

the glass transition temperatures of the polymeric blocks A, A′, B and C being below 0°C.

**Revendications**

1. Polymères greffés de

a) 50 à 100 parties en poids d'un monomère vinylique ou d'un mélange de monomères vinyliques sur

b) 10 à 200 parties en poids d'un caoutchouc polymère à structure séquencée consistant en motifs de structure répétés de formule I

$$\{A - B\}_n \quad \text{(I)}$$

et le cas échéant en motifs de structure répétés de formule II

$$\{A' - C\}_m \quad \text{(II)}$$

dans lesquelles n et m sont des nombres tels que le poids moléculaire moyen ($M_w$) du caoutchouc soit de 10000 à 1000000,

A et A′ représentent des segments bifonctionnels de polysiloxanes identiques ou différents répondant à

la formule III

$$\{(R^1)(R^2)SiO\}_x \quad (III)$$

dans laquelle $R^1$ et $R^2$ représentent des groupes aryle et/ou alkyle et x est un nombre tel que les segments III aient des poids moléculaires $M_w$ supérieurs à 500,

B représente des segments bifonctionnels d'homo- et/ou de copolymères de diènes conjugués, de poids moléculaires $M_w$ supérieurs à 800,

C représente des segments bifonctionnels de polyesters aliphatiques et/ou de polyéthers aliphatiques de poids moléculaires $M_w$ supérieurs à 800,

les températures de transition du second ordre des blocs polymères A, A', B et C étant inférieures à 0°C.

2. Polymères greffés selon la revendication 1, caractérisés en ce que les monomères vinyliques consistent en styrène, $\alpha$-méthylstyrène, acrylonitrile, méthacrylate de méthyle ou leurs mélanges.

3. Polymères greffés selon les revendications 1 et 2, caractérisés en ce que le segment B du caoutchouc est un radical bifonctionnel d'un homopolymère ou d'un copolymère de butadiène avec jusqu'à 35% en poids (par rapport à B) d'acrylonitrile, de styrène, de méthacrylate de méthyle ou d'un acrylate d'alkyle en $C_1$-$C_{12}$ copolymérisé.

4. Procédé de préparation de polymères greffés, caractérisé en ce que l'on soumet des monomères vinyliques ou mélanges de monomères vinyliques a polymérisation radicalaire en présence d'un caoutchouc à structure séquencée consistant en motifs de structure répétés de formule I

$$\{A - B\}_n \quad (I)$$

et le cas échéant en motifs de structure répétés de formule II

$$\{A' - C\}_m \quad (II)$$

dans lesquelles n et m sont des nombres tels que le poids moléculaire moyen $M_w$ du caoutchouc soit de 10000 à 1000000,

A et A' représentent des segments bifonctionnels de polysiloxanes identiques ou différents de formule III

$$\{(R^1)(R^2)SiO\}_x \quad (III)$$

$R^1$ et $R^2$ représentent des groupes aryle et/ou alkyle et x est un nombre tel que les segments III aient des poids moléculaires $M_w$ supérieurs à 500,

B représente des segments bifonctionnels d'homo- et/ou co-polymères de diènes conjugués de poids moléculaires $M_w$ supérieurs à 800 ;

C représente des segments bifonctionnels de polyesters aliphatiques et/ou de polyéthers aliphatiques de poids moléculaires $M_w$ supérieurs à 800,

les températures de transition du second ordre des blocs polymères A, A', B et C étant inférieures à 0°C.